# EUROPÄISCHE PATENTSCHRIFT

(11) **EP 3 523 556 B1**
(45) Veröffentlichungstag und Bekanntmachung des Hinweises auf die Patenterteilung: **01.12.2021**
(21) Anmeldenummer: 17794217.4
(22) Anmeldetag: 10.10.2017
(51) Int. Cl.: F16H 25/20, F16H 25/24

(54) **GETRIEBE SOWIE KOPFSTÜTZE MIT WENIGSTENS EINEM ELEKTRISCHEN ANTRIEB, UMFASSEND EIN GETRIEBE**
GEAR MECHANISM, AND HEADREST HAVING AT LEAST ONE ELECTRIC DRIVE, COMPRISING A GEAR MECHANISM
TRANSMISSION AINSI QU'APPUIE-TÊTE POURVU D'AU MOINS UN ENTRAÎNEMENT ÉLECTRIQUE, COMPRENANT UNE TRANSMISSION

(30) Priorität: 10.10.2016 DE 102016011988
(43) Veröffentlichungstag der Anmeldung: 14.08.2019
(73) Patentinhaber: GRAMMER AG, 92289 Ursensollen (DE)
(72) Erfinder: KOTZ, Maximilian, 92286 Rieden (DE); BÖSL, Manuel, 92272 Freudenberg (DE)
(74) Vertreter: Roche, von Westernhagen & Ehresmann
(86) Internationale Anmeldenummer: PCT/DE2017/000334
(87) Internationale Veröffentlichungsnummer: WO 2018/068778

(56) Entgegenhaltungen:
- EP-A1- 2 743 157
- DE-A1- 3 635 040
- DE-A1-102007 017 129
- DE-A1-102010 005 145
- DE-A1-102012 104 559
- DE-A1-102012 200 834
- DE-B- 1 043 004
- JP-A- 2005 172 157

## Beschreibung

Die Erfindung betrifft ein Getriebe mit zwei mit einem Gewinde versehenen Getriebeteilen, deren Gewinde in Eingriff stehen.

Kopfstützen weisen z.B. elektrische Antriebe für die Vertikalverstellung der Kopfanlagefläche auf. Ein Motor treibt dabei z.B. eine Spindelmutter an, die mit einer Spindel in Eingriff steht. Die Spindelmutter und die Spindel bilden ein Getriebe im Sinne der Erfindung. Die Spindel ist z.B. an der Traverse eines Tragstangenbügels verdrehsicher gehalten. Der Motor und die Spindelmutter sind an dem Kopfanlageteil gehalten. Auf diese Weise wird das Kopfanlageteil relativ zu dem Tragstangenbügel und der Spindel vertikal bewegt.

Solche Bewegungsgewinde haben großen Einfluss auf den Wirkungsgrad des Antriebs. Sie werden in der Regel mit einem Betriebsspiel ausgelegt. Das Betriebsspiel ist z.B. abhängig von der Gewindelänge, den Materialien und dem Temperaturbereich. Diese Faktoren können - insbesondere bei unterschiedlichen Materialpaarungen, wie z.B. Kunststoff / Metall - machen ein großes Axialspiel zwischen den Gewinden der Spindelmutter und der Spindel notwendig.

Die DE 10 2007 017 129 A1 betrifft einen Schraubentrieb mit einer Spindel aus Metall sowie eine aus einem Kunststoff spritzgegossenen Antriebsmutter. Für die spielfreie und selbsthemmende Lagerung der Spindel über einen großen Temperaturbereich hinweg ist erfindungsgemäß vorgesehen, dass die Antriebsmutter aus einem thermoplastischen Elastomer, insbesondere auf der Basis von Polyester, ausgebildet ist.

Die DE 36 35 040 A1 betrifft ein Schraubengetriebe. Es bestand das Problem, dass bei komplexer Lastverteilung der Fall eintreten kann, dass die Mutter gegenüber der Spindel schiefgestellt oder gekippt ist. In vielen Fällen bewirkt diese Schiefstellung ein Verklemmen. Ein relatives Drehen zwischen Mutter und Spindel ist in diesen Fällen nur erschwert möglich. Die Schiefstellung muss korrigiert werden, um eine einwandfreie Funktion sicherzustellen. Zur Vermeidung der Verklemmung weisen die Gewindeflanken mindestens eines Gewindes in radialer Richtung ein konvexes Profil auf und der Rillenboden mindestens eines Gewindes weist einen mittig verlaufenden Sockelvorsprung auf.

Es war Aufgabe der Erfindung ein Getriebe mit zwei Getriebeteilen zu schaffen, welche die notwendige Funktionssicherheit aufweist und wobei das axiale Gewindespiel auf das notwendige Minimum reduziert ist.

Die Aufgabe wurde gelöst durch ein Getriebe mit den Merkmalen des Anspruchs 1.

Das Getriebe umfasst ein erstes Getriebeteil mit einem primären Gewinde und ein zweites Getriebeteil mit einem sekundären Gewinde. Das primäre Gewinde und das sekundäre Gewinde stehen in Eingriff miteinander. Zwischen dem primären Gewinde und dem sekundären Gewinde ist eine Gewindepaarung mit einem axialen Gewindespiel ausgebildet. Im Sinne dieser Anmeldung bedeutet "axiales Gewindespiel" das Gewindespiel in Längsrichtung des Gewindes. In wenigstens einem ersten Bereich der Gewindepaarung ist ein erstes Gewindespiel und in zumindest einem anderen Bereich der Gewindepaarung ist ein zweites Gewindespiel ausgebildet.

Die Bereiche der Gewindepaarung mit unterschiedlichem Gewindespiel werden hervorgerufen aufgrund von Maßänderungen in den unterschiedlichen Getriebeteilen. Die Maßänderungen betreffen z.B. nur die Gewinde eines der Getriebeteile oder beide Getriebeteile. Wenn z.B. ein Getriebeteil ein Kunststoffteil und das andere Getriebeteil ein Metallteil ist, kann z.B. das Kunststoffteil die Maßunterschiede in den Gewindebereichen aufweisen, da hier die Fertigung in der Regel einfacher ist. Das Metallteil weist dann über die gesamte Länge des Gewindes ein einheitliches Gewinde auf.

Die Gewindepaarung wird z.B. in wenigstens einem Bereich so ausgelegt, dass sie den Anforderungen an die Materialpaarung zwischen den an der Gewindepaarung beteiligten Gewinden oder Getriebeteilen mit der entsprechenden Wärmeausdehnung, an die Länge der in Eingriff stehenden Gewindepaarung, die Temperaturschwankungen und weiteren kritischen Anforderungen genügt. Dieser wenigstens eine Bereich der Gewindepaarung ist mit einem relativ engen axialen Spiel versehen und erfüllt damit die Anforderung einer möglichst spielfreien Gewindepaarung. D.h. in diesem Bereich ist das Spiel lediglich unter Berücksichtigung der Wärmeausdehnung über die axiale Länge des speziellen Bereichs ausgelegt. Der erste Bereich kann z.B. zwischen einem ¾ und mehreren Gewindegängen, z.B. zwischen ¾ und 5 Gewindegängen umfassen.

Der Vorteil der Erfindung besteht darin, dass es nicht zu unerwünschten axialen Bewegungen zwischen den Getriebeteilen kommt, die z.B. Geräusche erzeugen können.

Die Erfindung kann dann zum Einsatz kommen, wenn die Ausdehnungskoeffizienten von dem ersten Getriebeteil und dem zweiten Getriebeteil unterschiedlich, insbesondere sehr unterschiedlich, sind. Das ist z.B. der Fall, wenn das erste Getriebeteil ein Kunststoffteil und das zweite Getriebeteil ein Metallteil ist. Kunststoffe haben in der Regel einen deutlich größeren Ausdehnungskoeffizienten als Metall.

Wenigstens eines der Gewinde, d.h. das primäre Gewinde und / oder das sekundäre Gewinde ist z.B. elastisch oder plastisch verformbar ausgebildet. Es wird damit sichergestellt, dass sich die Gewindegänge in dem Bereich der Gewindepaarung, die mit einem geringen Spiel versehen ist, so flexibel verformen können, dass sie sich bei einem Schwellenwert der Belastung elastisch verformen, bis mehrere oder alle Gewindegänge mit dem Gegengewinde in Kontakt stehen. Wenn z.B. eine große Last von dem Gewinde übertragen werden muss, verformt sich der Bereich des Gewindes, der mit einem geringen Spiel versehen ist, derart, dass mehrere Bereiche oder das gesamte Gewinde tragen.

Das erste Gewindespiel ist z.B. kleiner, als das zweite Gewindespiel.

Das erste Getriebeteil kann z.B. drehbar gelagert und das zweite Gewindeteil fest angeordnet sein. Die drehbare Lagerung bzw. die fest angeordnete Lagerung bezieht sich auf das Teil, an welchem das Getriebeteil gelagert ist.

Z.B. umfasst das Gewinde eines der Getriebeteile genau einen Bereich mit dem ersten Gewindespiel und genau einen Bereich mit dem zweiten Gewindespiel. In diesem Fall ist ein Bereich der Gewindepaarung mit einem geringen Spiel und ein zweiter Bereich mit einem so großen Spiel versehen, dass den Einflussfaktoren Materialpaarung, Länge des Gewindes, Temperaturschwankungen etc. Rechnung getragen wird.

Der Bereich mit dem ersten Gewindespiel erstreckt sich axial über mindestens einen ¾ Gewindegang z.B. über einen Gewindegang, über zwei Gewindegänge, über drei Gewindegänge oder über mehrere Gewindegänge. Da dieser Bereich lediglich wenige Gewindegänge umfasst, ist sichergestellt, dass zwischen dem primären Gewinde und dem sekundären Gewinde in diesem Bereich auch über ein größeres Temperaturfenster wenig Relativbewegung in axialer Richtung stattfindet.

Das erste Getriebeteil ist z.B. eine Spindelmutter und das zweite Gewindeteil ist z.B. eine Spindel. Die Spindelmutter ist z.B. drehbewegbar an einem Antrieb gelagert, und bewegt die Spindel translatorisch in axiale Richtung. Gemäß einer Alternative ist die Spindelmutter fest angeordnet und die Spindel ist drehbar an einem Antrieb gelagert. Z.B. ist die Spindel fest an einem Basisteil einer Kopfstütze gehalten und die Spindelmutter ist drehbar an einem Antrieb eines Kopfanlageteils gelagert. Je nach Drehrichtung bewegt die Spindelmutter das Kopfanlageteil dann axial in eine erste oder eine zweite, der ersten Richtung entgegengesetzte Richtung.

Die Erfindung betrifft gemäß einem zweiten Aspekt eine Kopfstütze mit einem elektrischen Antrieb.

Eine solche Kopfstütze ist aus offenkundiger Vorbenutzung bekannt. Es wird Bezug genommen auf den oben bereits zu dem ersten Aspekt der Erfindung genannten Stand der Technik.

Es war Aufgabe der Erfindung, eine Kopfstütze mit einem elektrischen Antrieb zu schaffen, die ein geringeres Spiel in der Gewindepaarung von zwei Getriebeteilen des Antriebs aufweist.

Die Aufgabe wurde gelöst durch eine Kopfstütze mit den Merkmalen des Anspruchs 10**.**

Die Kopfstütze umfasst wenigstens eine Tragstange. Im Sinne der Erfindung ist auch ein Tragstangenbügel eine Tragstange. Des Weiteren umfasst die Kopfstütze ein relativ zu der Tragstange bewegbares Teil. Das kann z.B. die Rückenlehne eines Fahrzeugsitzes sein, wobei die Tragstangen relativ zu der Rückenlehne vertikal verlagert werden oder ein Kopfanlageteil sein, welches vertikal oder horizontal zu der Tragstange verlagert wird.

Das bewegbare Teil wird z.B. mit einem einen Elektromotor umfassenden Antrieb bewegt, welcher zwei Getriebeteile aufweist, die ein Getriebe gemäß dem ersten Erfindungsaspekt bilden. D.h., die Getriebe sind jeweils mit einem Gewinde versehen und die Gewinde der Getriebeteile stehen in Eingriff und bilden eine Gewindepaarung. Ein Getriebeteil ist z.B. der Tragstange zugeordnet und das andere Getriebeteil ist z.B. der Rückenlehne eines Fahrzeugsitzes oder einem Kopfanlageteil der Kopfstütze zugeordnet. Um Wiederholungen zu vermeiden wird in Bezug auf die Ausbildung des Getriebes und der Gewindepaarung auf die Ausführungen zu dem ersten Aspekt der Erfindung verwiesen.

Weitere Vorteile der Erfindung ergeben sich anhand eines in den Figuren schematisch dargestellten Ausführungsbeispiels. Es zeigen:
Fig. 1 eine perspektivische Vorderansicht einer Kopfstütze mit Vertikalverstellung und Horizontalverstellung des Kopfanlageteils, wobei ein Kopfpolster der Kopfstütze nicht dargestellt ist,
Fig. 2 eine perspektivische rückwärtige Ansicht der Kopfstütze gemäß Fig. 1,
Fig. 3 eine perspektivische Darstellung eines Antriebsgehäuses,
Fig. 4 eine Draufsicht auf das Antriebsgehäuse, wobei der Deckel der Übersichtlichkeit halber nicht dargestellt ist,

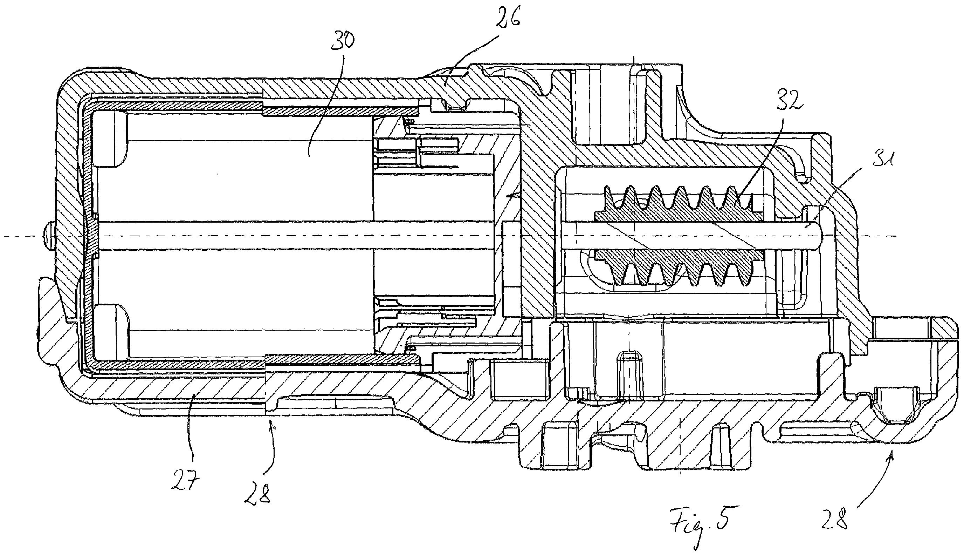

Fig. 5 eine Schnittansicht gemäß Schnittlinie V - V in Fig. 4, wobei der Deckel dargestellt ist
Fig. 6 eine Schnittdarstellung der Spindelmutter als Einzelteil,
Fig. 7 eine vergrößerte Darstellung der Spindelmutter und der Spindel.

Eine Kopfstütze insgesamt ist in den Zeichnungen mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen sind.

Die Kopfstütze umfasst ein Basisteil 11, welches in die Richtungen z1 und z2 verstellbar an Tragstangen 13a und 13b eines Tragstangenbügels 12 gelagert ist. Die Tragstangen 13a und 13b sind durch eine Traverse 14 miteinander verbunden. Bei der Bewegung in die Richtungen z1 und z2 wird das Basisteil 11 relativ zu dem Tragstangenbügel 12 verlagert. Für die Verlagerung in die Richtungen z1 und z2 weist die Kopfstütze 10 einen Vertikalantrieb 15 auf.

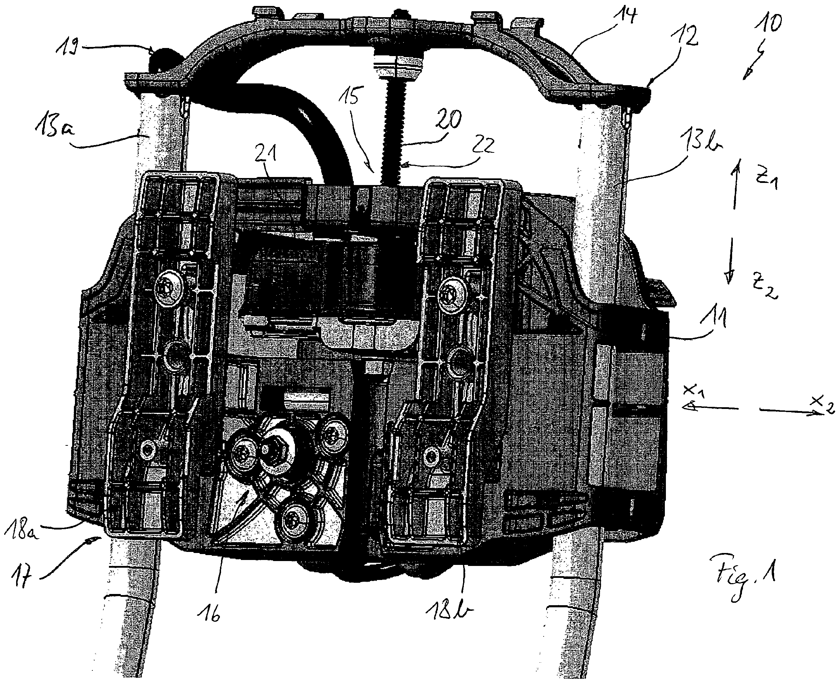

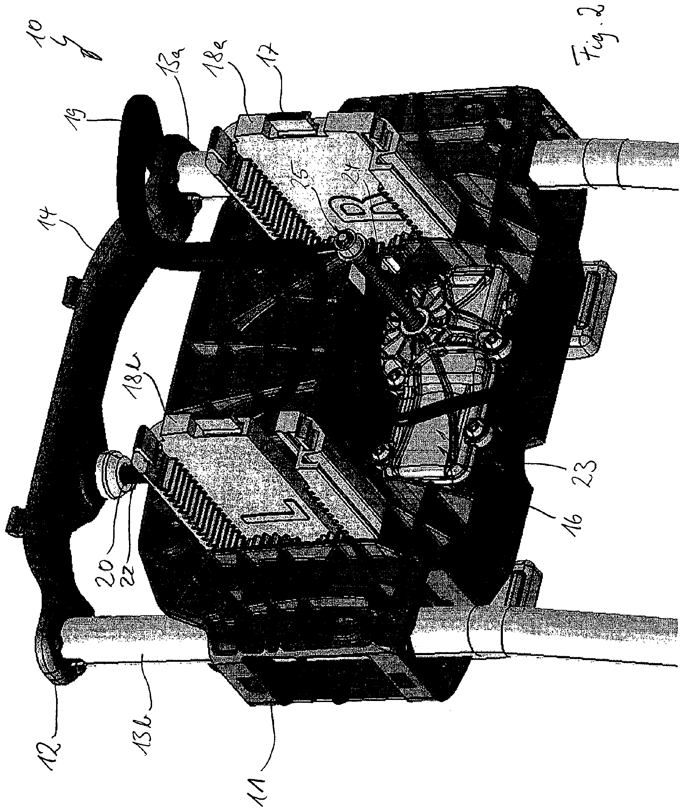

Des Weiteren umfasst die Kopfstütze 10 eine Kopfanlage 17, die in die Richtungen x1 und x2 verstellbar an dem Basisteil 11 gelagert ist. Von der Kopfanlage 17 sind in den Fig. 1 und 2 lediglich Führungen 18a und 18b dargestellt. Eine Kopfanlageplatte ist z.B. nicht dargestellt. Die Kopfanlage 17 kann mittels eines Horizontalantriebs 16 in die Richtungen x1 und x2 relativ zu dem Basisteil 11 verlagert werden.

Beide Tragstangen 13a und 13b sind als Rohre ausgebildet. Zur Steuerung und zur Stromversorgung des Vertikalantriebs 15 sowie des Horizontalantriebs 16 ist ein mehradriges Kabel 19 durch einen Innenraum des Endbereichs 13a geführt und mit dem Vertikalantrieb 15 sowie mit dem Horizontalantrieb 16 verbunden.

In Fig. 1 ist eine Spindel 20 erkennbar, die Teil des Vertikalantriebs 15 ist. Die Spindel 20 ist relativ zu dem Tragstangenbügel 12 unbewegbar fest an dem Tragstangenbügel 12 gehalten. Ein Gewinde 22 der Spindel 20 steht mit einem Gewinde einer in Fig. 1 nicht dargestellten Spindelmutter in Eingriff, die in einem Gehäuse 21 drehbar gelagert ist und von einem in dem Gehäuse 21 angeordneten Elektromotor angetrieben werden kann. Je nach Drehrichtung der Spindelmutter wird das fest mit dem Gehäuse 21 verbundene Basisteil in Richtung z1 oder in Richtung z2 bewegt.

In Fig. 2 ist ein dem Gehäuse 21 entsprechendes Gehäuse 23 erkennbar, das an dem Basisteil 11 befestigt ist. Auch in diesem Gehäuse ist eine Spindelmutter drehbar gelagert, die von einem Elektromotor angetrieben werden kann. Ein Gewinde der Spindelmutter steht mit einem Gewinde 24 einer Spindel 25 in Eingriff. Die Spindel 25 ist fest mit der Kopfanlage 17 verbunden. Je nach Drehrichtung der Spindelmutter wird die Kopfanlage 17 in Richtung x1 oder in Richtung x2 relativ zu dem Basisteil 11 und dem Tragstangenbügel 12 bewegt.

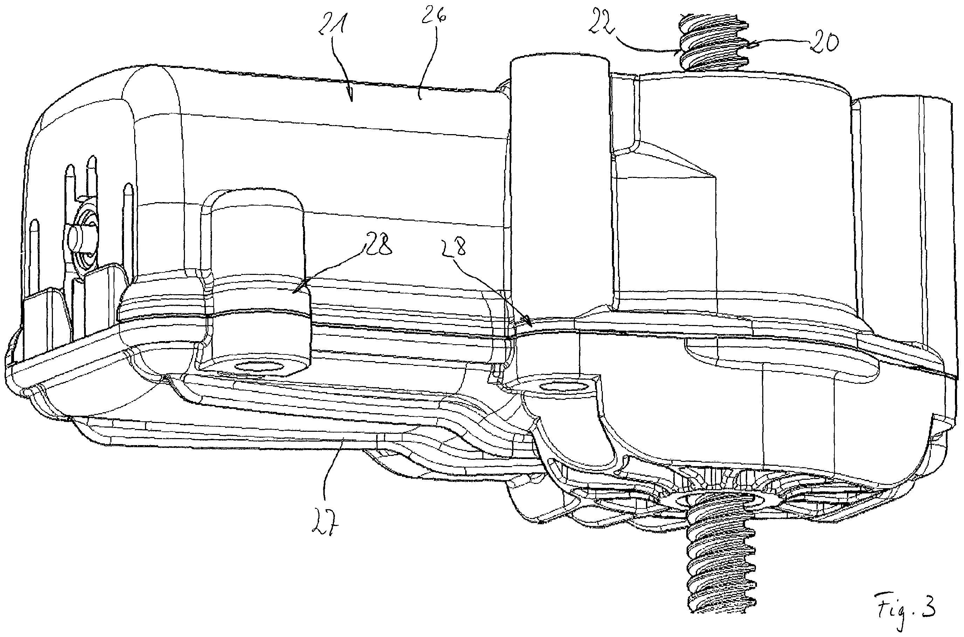

In Fig. 3 sind das Gehäuse 21 und die Spindel 20 des Vertikalantriebs 15 dargestellt. Die nachfolgende Beschreibung des Vertikalantriebs 15 gilt in gleicher Weise auch für das Gehäuse 23 und die Spindel 25 des Horizontalantriebs 16, weil der Vertikalantrieb 15 und der Horizontalantrieb 16 gleich aufgebaut sind.

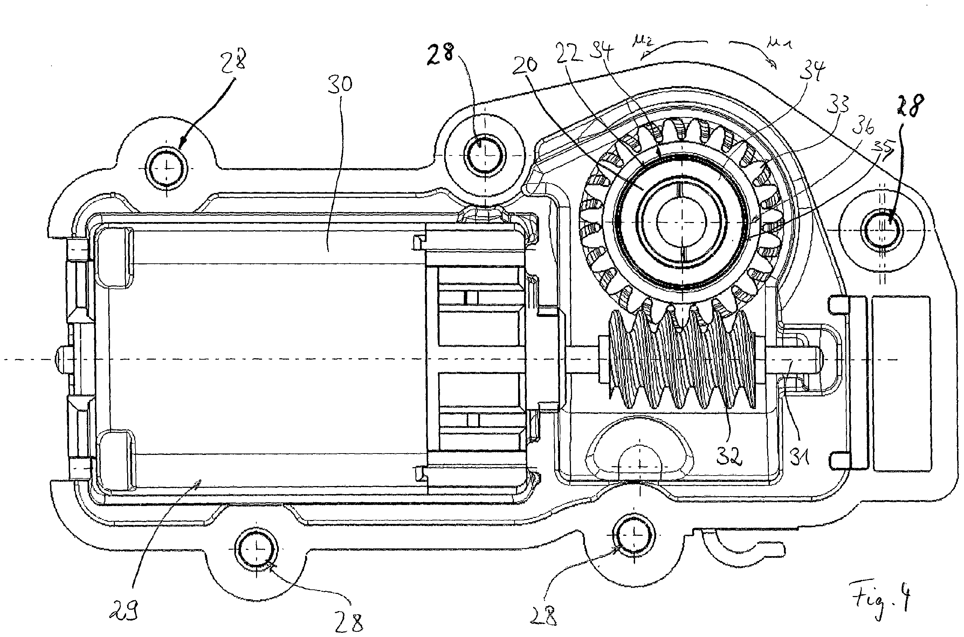

Das Gehäuse 21 umfasst eine Gehäuseschale 26 sowie einen Deckel 27, welcher mit mehreren Befestigungen 28 an der Gehäuseschale 26 gehalten ist. Die Spindel 20 durchsetzt nicht dargestellte Öffnungen in dem Gehäuse 21. In Fig. 4 ist eine Draufsicht auf einen Innenraum 29 des Gehäuses 21 gezeigt. In dem Innenraum 29 des Gehäuses 21 ist ein Elektromotor 30 fest angeordnet. Der Elektromotor 30 umfasst eine Antriebswelle 31, die in zwei entgegengesetzte Drehrichtungen antreibbar ist. Auf der Antriebswelle 31 ist eine Schnecke 32 gelagert und mit der Antriebswelle 31 drehverbunden.

Die Schnecke 32 steht mit der Außenverzahnung 33 einer Spindelmutter 34 in Eingriff und treibt die Spindelmutter 34 je nach Drehrichtung des Elektromotors 30 in die Drehrichtungen u1 oder u2 an. Ein Innengewinde 35 der Spindelmutter 34 steht mit dem Gewinde 22 der Spindel 20 in Eingriff. Durch den Eingriff des Innengewindes mit dem Gewinde 22 wird von der Spindelmutter 34 und der Spindel 20 ein Getriebe 36 im Sinne der Erfindung gebildet. Die Spindelmutter 34 ist aus Kunststoff gefertigt, während die Spindel 20 ein Metallteil ist.

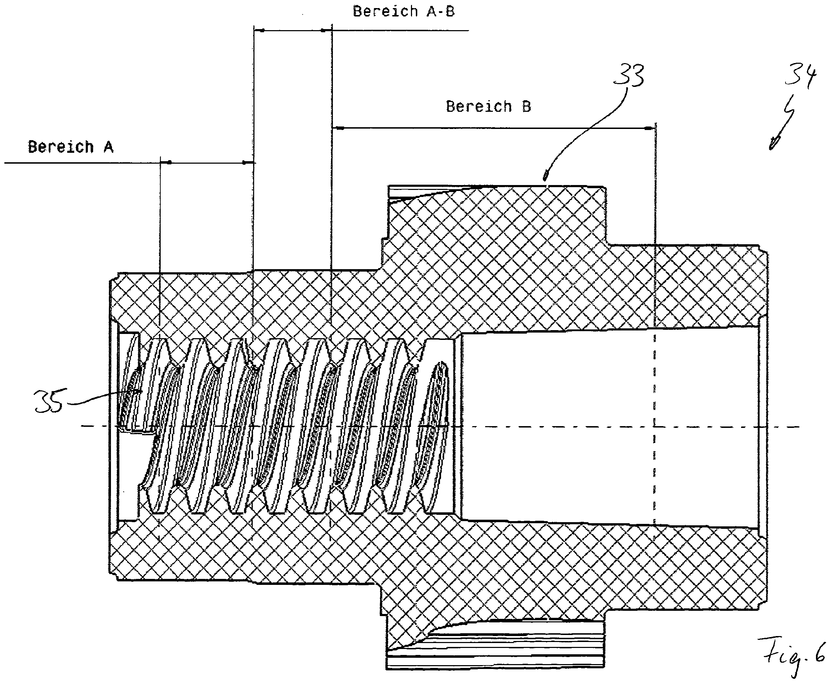

Gemäß Fig. 6 weist das Innengewinde 35 drei axiale Bereiche A, AB und B auf, in welchen das Gewinde unterschiedlich ausgebildet ist. Die Steigung des Gewindes bleibt über die gesamte Länge des Gewindes gleich, aber die Breite der Zähne ändert sich. "Axialer Bereich" bedeutet im Sinne der Erfindung, dass sich der Bereich in Längsrichtung des jeweiligen Gewindes, d.h. in eine Richtung parallel zu der Mittelachse m des Gewindes in die Richtung z1 oder z2 erstreckt. Das Gewinde der Spindel 20 und der Spindelmutter 34 sind koaxial zu der Mittelachse m ausgebildet.

In dem Bereich A, der zwei Gewindegänge umfasst, ist das Gewinde 35 unter Berücksichtigung der Materialpaarung zwischen der Spindelmutter 34 und der Spindel 20, der Länge des Gewindebereichs A, möglicher Temperaturschwankungen sowie weiterer Einflussfaktoren derart ausgebildet, dass die Gewindepaarung mit einem engeren axialen Spiel versehen ist.

In dem Bereich B weist das Innengewinde 35 ein Spiel auf, welches der Materialpaarung zwischen der Spindelmutter 34 und der Spindel 20, der gesamten Länge der in Eingriff stehenden Gewinde 22 und 24, möglichen Temperaturschwankungen sowie weiteren Einflussfaktoren Rechnung trägt. Der Bereich AB ist ein Übergangsbereich, in welchem das Gewindespiel zwischen dem des Bereichs A und dem des Bereichs B liegt.

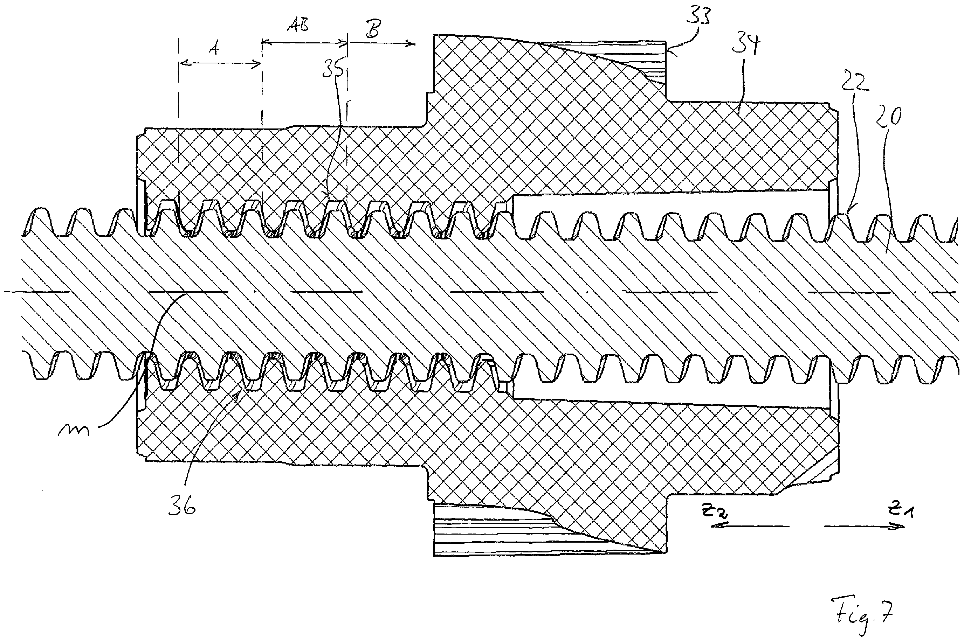

In Fig. 7 sind die Spindelmutter 34 und die Spindel 20 dargestellt. In dem Bereich A ist sind das Innengewinde 35 und das Gewinde 22 erkennbar mit weniger axialem Spiel versehen als in dem Bereich B. Der Kunststoff der Spindelmutter 34 ist derart elastisch oder plastisch verformbar, dass sich in dem Fall einer großen Krafteinwirkung auf das Basisteil 11, welche über die Spindelmutter 34 auf die Spindel 20 übertragen wird, die Gewindegänge in dem Bereich A und teilweise auch in dem Bereich AB der Spindelmutter 34 verformen, so dass das gesamte Gewinde in den Bereichen A, AB und B trägt. In einem Normaltemperaturbereich oder bei normaler Last trägt im Wesentlichen der Bereich A des Innengewindes 35, der mit wenig Spiel zu dem Gewinde 22 ausgebildet ist. Ein unerwünschtes Klappern durch eine Relativbewegung der Gewinde 22 und 35 wird auf diese Weise vermieden.

## Patentansprüche

1. Getriebe mit einem ersten Getriebeteil mit einem primären Gewinde (35) mit einem ersten Ausdehnungskoeffizienten und mit einem zweiten Getriebeteil mit einem sekundären Gewinde (22) mit einem zweiten Ausdehnungskoeffizienten, der sich von dem ersten Ausdehnungskoeffizienten unterscheidet, wobei zwischen dem primären Gewinde (35) und dem sekundären Gewinde (22) eine Gewindepaarung (35/22) mit einem axialen Gewindespiel ausgebildet ist, wobei das primäre Gewinde mit dem sekundären Gewinde in Eingriff steht, **dadurch gekennzeichnet, dass** in wenigstens einem Bereich (A) der Gewindepaarung (35/22) ein erstes axiales Gewindespiel und in zumindest einem zweiten Bereich (B) der Gewindepaarung (35/22) ein zweites, von dem ersten Gewindespiel unterschiedliches axiales Gewindespiel ausgebildet ist.

2. Getriebe nach Anspruch 1, **dadurch gekennzeichnet, dass** das Gewindespiel in dem ersten Bereich (A) kleiner ist, als in dem zweiten Bereich (B).

3. Getriebe nach einem der vorangehenden Ansprüche, **dadurch gekennzeichnet, dass** das erste Getriebeteil drehbar gelagert ist und das zweite Getriebeteil fest angeordnet ist.

4. Getriebe nach einem der vorangehenden Ansprüche, **dadurch gekennzeichnet, dass** das erste Getriebeteil drehbar gelagert ist und das zweite Getriebeteil linear bewegbar gelagert ist.

5. Getriebe nach einem der vorangehenden Ansprüche, **dadurch gekennzeichnet, dass** die Gewindepaarung genau einen Bereich (A) mit dem ersten Gewindespiel und genau einen zweiten Bereich (B) mit dem zweiten Gewindespiel aufweist.

6. Getriebe nach einem der vorangehenden Ansprüche, **dadurch gekennzeichnet, dass** der erste Bereich (A) sich über etwa einen ¾ Gewindegang, über einen Gewindegang, über zwei Gewindegänge oder über mehrere Gewindegänge erstreckt.

7. Getriebe nach einem der vorangehenden Ansprüche, **dadurch gekennzeichnet, dass** das erste Getriebeteil eine Spindelmutter (34) und das zweite Getriebeteil eine Spindel (20, 25) ist.

8. Getriebe nach einem der vorangehenden Ansprüche, **dadurch gekennzeichnet, dass** das erste Getriebeteil ein Kunststoffteil und das zweite Getriebeteil ein Metallteil ist.

9. Getriebe nach einem der vorangehenden Ansprüche, **dadurch gekennzeichnet, dass** wenigstens eines der Gewinde (22, 35), das primäre Gewinde (35) und / oder das sekundäre Gewinde (22), elastisch oder plastisch verformbar ausgebildet ist

10. Kopfstütze (10) mit wenigstens einem elektrischen Antrieb (15, 16), umfassend ein Getriebe (36) nach einem der Ansprüche 1 bis 9.

## Claims

1. Gear mechanism with a first gear mechanism part with a primary thread (35) having a first expansion coefficient and with a second gear mechanism part with a secondary thread (22) having a second expansion coefficient, which is distinct from the first expansion coefficient, wherein a thread pairing (35/22) with an axial thread play is formed between the primary thread (35) and the secondary thread (22), wherein the primary thread is engaged with the secondary thread, **characterised in that** in at least one region (A) of the thread pairing (35/22) a first axial thread play is formed and in at least one second region (B) of the thread pairing (35/22) a second axial thread play, distinct from the first thread play, is formed.

2. Gear mechanism according to claim 1, **characterised in that** the thread play is smaller in the first region (A) than in the second region (B).

3. Gear mechanism according to any one of the preceding claims, **characterised in that** the first gear mechanism part is rotatably mounted and the second gear mechanism part is fixedly arranged.

4. Gear mechanism according to any one of the preceding claims, **characterised in that** the first gear mechanism part is rotatably mounted and the second gear mechanism part is mounted so as to be linearly movable.

5. Gear mechanism according to any one of the preceding claims, **characterised in that** the thread pairing has exactly one region (A) with the first thread play and exactly one second region (B) with the second thread play.

6. Gear mechanism according to any one of the preceding claims, **characterised in that** the first region (A) extends over roughly a ¾ thread turn, over one thread turn, over two thread turns or over a plurality of thread turns.

7. Gear mechanism according to any one of the preceding claims, **characterised in that** the first gear mechanism part is a spindle nut (34) and the second gear mechanism part is a spindle (20, 25).

8. Gear mechanism according to any one of the preceding claims, **characterised in that** the first gear mechanism part is a plastic part and the second gear mechanism part is a metal part.

9. Gear mechanism according to any one of the preceding claims, **characterised in that** at least one of the threads (22, 35), the primary thread (35) and/or the secondary thread (22), is formed so as to be elastically or plastically deformable.

10. Headrest (10) with at least one electric drive (15, 16), comprising a gear mechanism (36) according to any one of claims 1 to 9.

## Revendications

1. Transmission avec une première pièce de transmission présentant un filetage primaire (35) doté d'un premier coefficient de dilatation et avec une deuxième pièce de transmission présentant un filetage secondaire (22) doté d'un deuxième coefficient de dilatation qui se distingue du premier coefficient de dilatation, dans laquelle, entre le filetage primaire (35) et le filetage secondaire (22) est formé un appariement de filetages (35/22) avec un jeu de filetage axial, le filetage primaire étant en prise avec le filetage secondaire, **caractérisé en ce qu'**il est formé sur au moins une plage (A) de l'appariement de filetages (35/22), un premier jeu de filetage axial, et sur au moins une deuxième plage (B) de l'appariement de filetages (35/22), un deuxième jeu de filetage axial différent du premier jeu de filetage.

2. Transmission selon la revendication 1, **caractérisée en ce que** le jeu de filetage est plus faible sur la première plage (A) que sur la deuxième plage (B).

3. Transmission selon une des revendications précédentes, **caractérisée en ce que** la première pièce de transmission est montée de manière pivotante et la deuxième pièce de transmission est agencée de manière fixe.

4. Transmission selon une des revendications précédentes, **caractérisée en ce que** la première pièce de transmission est montée de manière pivotante et la deuxième pièce de transmission est agencée de manière mobile linéairement.

5. Transmission selon une des revendications précédentes, **caractérisée en ce que** l'appariement de filetage possède précisément une plage (A) présentant le premier jeu de filetage et une deuxième plage (B) présentant le deuxième jeu de filetage.

6. Transmission selon une des revendications précédentes, **caractérisée en ce que** la première plage (A) s'étend sur environ 3/4 de pas de filetage, sur un pas de filetage, sur deux pas de filetage ou sur plusieurs pas de filetage.

7. Transmission selon une des revendications précédentes, **caractérisée en ce que** la première pièce de filetage est un écrou de broche (34) et la deuxième pièce de filetage une broche (20, 25).

8. Transmission selon une des revendications précédentes, **caractérisée en ce que** la première pièce de filetage est une pièce en matière plastique et la deuxième pièce de filetage une pièce métallique.

9. Transmission selon une des revendications précédentes, **caractérisée en ce qu'**au moins un des filetages (22, 35), le filetage primaire (35) et/ou le filetage secondaire (22) sont conçus de façon déformable élastiquement ou plastiquement.

10. Appuie-tête (10) avec au moins un entraînement électrique (15, 16) comprenant une transmission (36) selon une des revendications 1 à 9.
